# EUROPEAN PATENT SPECIFICATION

(11) **EP 3 118 965 B1**
(45) Date of publication and mention of the grant of the patent: **30.10.2019**
(21) Application number: 15194246.3
(22) Date of filing: 12.11.2015
(51) Int. Cl.: H02J 7/00, B60R 16/03, B60R 25/40

(54) **APPARATUS FOR CONTROLLING SUPPLY OF POWER OF BATTERY**
GERÄT ZUR VERWALTUNG DER STROMVERSORGUNG EINER BATTERIE
DISPOSITIF DE GESTION DE L'ALIMENTION D'UNE BATTERIE

(30) Priority: 15.07.2015 KR 20150100645; 15.07.2015 KR 20150100646; 21.07.2015 KR 20150103186
(43) Date of publication of application: 18.01.2017
(73) Proprietor: Hyundai Motor Company, Seoul 06797 (KR); Kia Motors Corporation, Seoul 06797 (KR)
(72) Inventor: AHN, Kyun Young, 07667 Seoul (KR); MIN, Kyung In, 13525 Seongnam-si, Gyeonggi-do (KR); CHOI, Jae Hoon, 15821 Gunpo-si, Gyeonggi-do (KR); KIM, Dong Gun, 15821 Gunposi, Gyeonggi-do (KR); LIM, Do Kyoung, 16509 Suwon-si, Gyeonggi-do (KR); KIM, Jin Wook, 13943 Anyang-si, Gyeonggi-do (KR); BANG, Jun Ho, 14102 Anyang-si, Gyeonggi-do (KR); LEE, Yoon Jun, 06106 Seoul (KR); YANG, Hee Tae, 07621 Seoul (KR); KIM, Yu Seok, 02461 Seoul (KR); KIM, Kyung Ho, 15469 Ansan-si, Gyeonggi-do (KR); KIM, Suk Hyung, 15821 Gunpo-si, Gyeonggi-do (KR); KIM, Dong Il, 13628 Seongnam-si, Gyeonggi-do (KR); PARK, Jin Ho, 06289 Seoul (KR)
(74) Representative: Viering, Jentschura & Partner mbB Patent- und Rechtsanwälte

(56) References cited:
- EP-A2- 0 452 073
- EP-A2- 2 797 201
- WO-A2-01/86735
- DE-A1- 2 503 704
- DE-A1-102013 220 730
- US-A1- 2005 231 042
- US-A1- 2006 267 543

## Description

### CROSS-REFERENCE TO RELATED APPLICATION

This application is based on and claims the benefit of priority to Korean Patent Application No. 10-2015-0100645, filed on July 15, 2015, Korean Patent Application No. 10-2015-0100646, filed on July 15, 2015, and Korean Patent Application No. 10-2015-0103186, filed on July 21, 2015 in the Korean Intellectual Property Office.

### TECHNICAL FIELD

The present disclosure relates to an apparatus for controlling supply of power of a battery, and more particularly, to a technology for allowing power of a battery to be re-supplied to loads when the power of the battery supplied to various loads in a vehicle is blocked to prevent over-discharge.

### BACKGROUND

Generally, electronic devices for a vehicle, for example, a black box for a vehicle, a navigation device, an audio-visual (AV) device, and the like, receive power supplied from a vehicle battery. Among these electronic devices for a vehicle, there are devices operated by continuously receiving the power even after the ignition of the vehicle is turned off.

A typical example of these devices is the black box for a vehicle. The black box continuously receives the power from the vehicle to record a driving situation and a parking situation. Since a battery for a vehicle has a limited capacity of about 60AH to 100AH, when the ignition of the vehicle is not turned on, such that a power generator is not operated, and thus, when all of the power charged in the battery is consumed driving may become impossible.

Therefore, an over-discharge preventing technology of the battery for a vehicle of monitoring a state of charge (SOC) of the battery and blocking supply of the power to the electronic devices for a vehicle when a voltage of the battery is less than a reference voltage has been developed. In the over-discharge preventing technology of the battery for a vehicle according to the related art, a relay is disposed between the battery and a load (e.g., electronic device) in the vehicle to block the supply of the power to the load based on a control of a battery management system (BMS). However, the over-discharge preventing technology of the battery for a vehicle according to the related art does not disclose a method of resuming the supply of the power to the load when the supply of the power to the load is blocked.

Further, WO 01/786735 A2 discloses an intelligent switch for a vehicle battery, which includes a switch connected to toggle between a first state for preventing current flow from the battery and a second state for allowing current flow from the battery, wherein a voltage monitor provides a voltage signal indicative of the voltage level of the battery, a vibration sensor provides a vibration signal indicative of vehicle vibration, and a controller is connected to receive the voltage signal and the vibration signal and generate a control signal for toggling the switch to the first state when no vibration of the vehicle is detected and the voltage level of the battery falls below a predetermined voltage threshold, wherein the controller generated another control signal when vibration is detected to toggle the switch to the second state, and wherein multiple voltage thresholds and associated timers are used to maintain an adequate battery charge level under variable load conditions. Also, an electric storage device protection apparatus and related techniques are known from EP 2 797 201 A2.

### SUMMARY

The present disclosure has been made to solve the above-mentioned problems occurring in the prior art while advantages achieved by the prior art are maintained intact.

An aspect of the present disclosure provides an apparatus for controlling supply of power of a battery capable of supplying the power of the battery to various loads in a vehicle by a door-lock release using a key by allowing the power of the battery to be re-supplied to the loads by rotation of the key for releasing the door-lock when the power of the battery supplied to the various loads in the vehicle is blocked to prevent over-discharge.

Objects of the present disclosure are not limited to the above-mentioned object, and other objects and advantages of the present disclosure that are not mentioned may be understood by the following description and will be more clearly appreciated by exemplary embodiments of the present disclosure. In addition, it may be appreciated that objects and advantages of the present disclosure may be realized by means mentioned in the claims and a combination thereof.

In this regard, the present invention provides an apparatus for controlling supply of power of a battery according to claim 1. Further advantageous embodiments are described in the dependent claims.

### BRIEF DESCRIPTION OF THE DRAWINGS

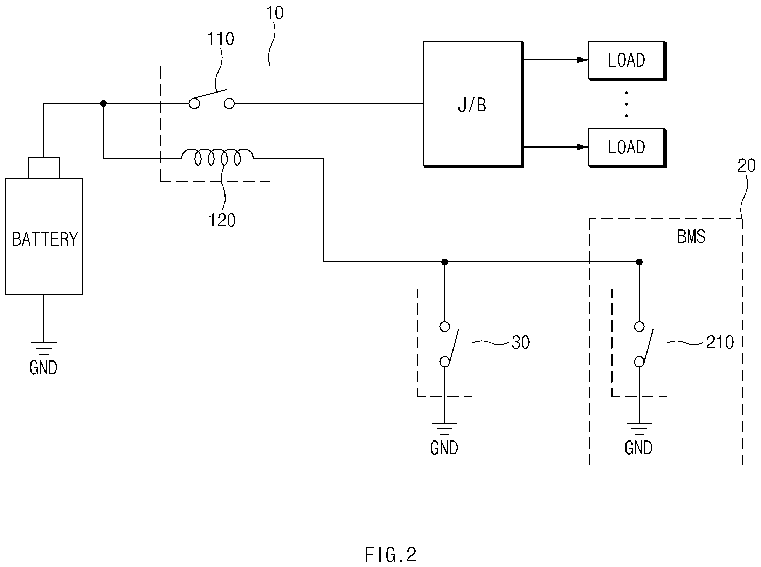

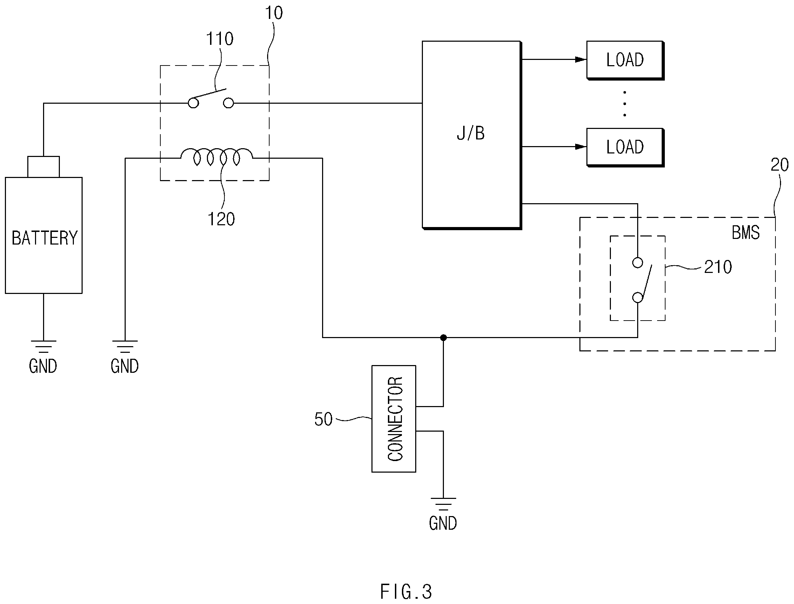

The above and other objects, features and advantages of the present disclosure will be more apparent from the following detailed description taken in conjunction with the accompanying drawings. Figs. 2 and 3 do not show embodiments of the present invention as such, but help explaining principles of the invention.
FIG. 1 is a view illustrating a configuration of an apparatus for controlling supply of power of a battery according to an exemplary embodiment of the present disclosure;
FIG. 2 is a view illustrating a configuration of an apparatus for controlling supply of power of a battery according to a first example configuration; and
FIG. 3 is a view illustrating a configuration of an apparatus for controlling supply of power of a battery according to a second example configuration.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

The above-mentioned objects, features, and advantages will become more obvious from the following description described below in detail with reference to the accompanying drawings. Therefore, those skilled in the art to which the present disclosure pertains may easily practice a technical idea of the present disclosure. Further, in describing the present disclosure, in response to determining that a detailed description of a well-known technology associated with the present disclosure may unnecessarily make the gist of the present disclosure unclear, it will be omitted. Hereinafter, exemplary embodiments of the present disclosure will be described in detail with reference to the accompanying drawings.

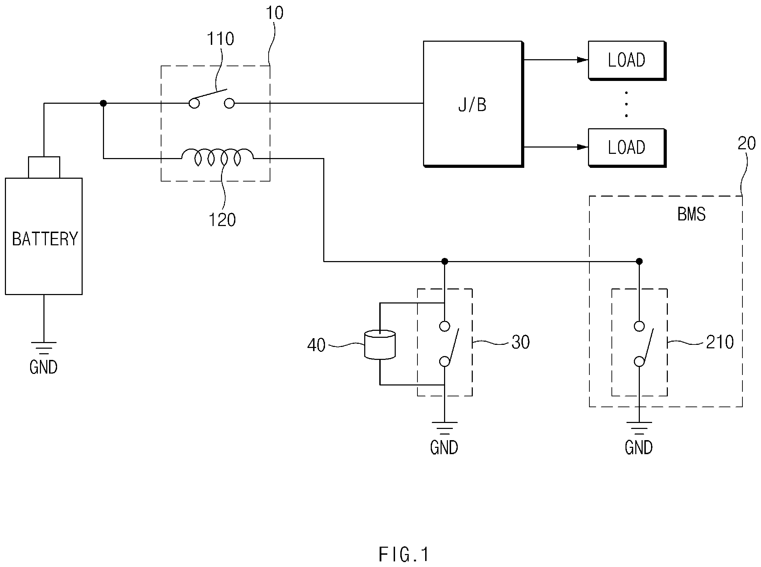

FIG. 1 is a view illustrating a configuration of an apparatus for controlling supply of power of a battery according to a first exemplary embodiment of the present disclosure. As illustrated in FIG. 1, the apparatus for controlling supply of power of a battery according to a first exemplary embodiment of the present disclosure may include a relay 10, a battery management system (BMS) 20, a switch 30, and a voltage generator 40.

The above-mentioned respective components will be described. First, the relay 10 may be configured to block power of a battery supplied to various loads within a vehicle under a control of the BMS 20 which may be operated by a controller. In other words, the BMS 20 may be configured to monitor a state of charge (SOC) of the battery, and enter an over-discharge preventing mode when a voltage of the battery is less than a reference voltage, thereby blocking the power of the battery supplied to the various loads within the vehicle. The BMS 20 may be configured to operate the relay 10 using a switch 210 mounted therein.

The relay 10 may include a switch 110 and a coil 120, and when power supplied to the coil 120 may be blocked by the BMS 20, the switch 110 may be opened, to block the power of the battery supplied to the various loads within the vehicle. Further, the switch 30, which may be a type of driving device for driving the relay 10, may be configured to drive the relay 10 when a predetermined voltage (e.g., a threshold voltage) is applied thereto, thereby allowing the power of the battery to be supplied to the various loads within the vehicle. In other words, when the predetermined voltage is applied to the switch 30, the switch 30 may be closed, to supply the power of the battery to the coil 120 of the relay 10. When the power of the battery is supplied to the coil 120 as described above, the switch 110 may be closed and the power of the battery may be supplied to the various loads within the vehicle.

In addition, the voltage generator 40, which may be configured to drive the switch 30, may be implemented by, for example, a piezoelectric element or a solar cell. When the voltage generator 40 is implemented by the piezoelectric element, is the voltage generator 40 may be mounted in a door-lock key box of the vehicle to generate a voltage by rotation of a key inserted into the door-lock key box. In particular, the door-lock key box may be a driver seat door-lock key box. The voltage generated, as described above, may be configured to drive the switch 30. When the voltage generator 40 is implemented by the solar cell, the voltage generator 40 may be configured to accumulate solar energy from the sun therein and apply a voltage for driving the switch 30 to the switch 30 when rotation of the key inserted into the door-lock key box is generated.

FIG. 2 is a view illustrating a configuration of an apparatus for controlling supply of power of a battery according to a first example, which is not part of the claimed invention as such. Since functions of a relay 10 and a BMS 20 of the apparatus for controlling supply of power of a battery according to a second exemplary embodiment of the present disclosure are the same as those of the relay 10 and the BMS 20 of the apparatus for controlling supply of power of a battery according to a first exemplary embodiment of the present disclosure, a further description thereof will be omitted.

In FIG. 2, a switch 30, which is a passive element operated by a driver manipulation, may be configured to drive the relay 10. In other words, when the switch 30 is closed by a driver, the power of the battery may be supplied to the coil 120 of the relay 10. When the power of the battery is supplied to the coil 120 as described above, the switch 110 may be closed and the power of the battery may be supplied to the various loads within the vehicle.

FIG. 3 is a view illustrating a configuration of an apparatus for controlling supply of power of a battery according to a second example, which is not part of the claimed invention as such. Since functions of a relay 10 and a BMS 20 of the apparatus for controlling supply of power of a battery according to a third exemplary embodiment of the present disclosure are the same as those of the relay 10 and the BMS 20 of the apparatus for controlling supply of power of a battery according to a first exemplary embodiment of the present disclosure, a further description thereof will be omitted.

In FIG. 3, a connector 50, which is a terminal to which an external power supply (e.g., a dry battery, a storage battery, a cellular phone, or the like) is connected, may be configured to supply external power to the coil 120 of the relay 10. When the power of the battery is supplied to the coil 120 as described above, the switch 110 may be closed and the power of the battery may be supplied to the various loads within the vehicle. In addition, when the switch 110 is closed, the power may also be supplied to the BMS 20 to activate the BMS 20, and the activated BMS 20 may be configured to close the switch 210, thereby maintaining the switch 110 in a closed state even when the external power through the connector 50 is blocked.

Meanwhile, the connector 50 may be configured to directly supply the external power to the coil 120 when the external power supply is connected thereto or may be implemented in a rotation type structure in which it may be configured to supply the external power to the coil 120 while rotating in a leftward or rightward direction by about 90 degrees when the external power supply is connected thereto.

As an example, the connector 50 may include a first member of which one side is connected to a circuit and the other side is formed of a first contact and a second member of which one side is formed of a second contact and the other side is formed of a terminal connected to the external power supply. In particular, the first contact of the first member and the second contact of the second member may correspond to each other, the first contact and the second contact may contact each other by rotation of the second member. In addition, the connector 50 may also be implemented in a button type structure in which it may be configured to supply the external power to the coil 120 based on whether a button is pressed or engaged when the external power supply is connected thereto.

As described above, according to exemplary embodiments of the present disclosure, when the power of the battery supplied to the various loads within the vehicle is blocked to prevent over-discharge, the power of the battery may re-supplied to the loads by a simplified manipulation, thereby making it possible to supply the power of the battery to the various loads within the vehicle.

Hereinabove, although the present disclosure has been described with reference to exemplary embodiments and the accompanying drawings, the present disclosure is not limited thereto, but may be variously modified and altered by those skilled in the art to which the present disclosure pertains without departing from the scope of the present disclosure claimed in the following claims.

### SYMBOL OF EACH OF THE ELEMENTS IN THE FIGURES

- 10:: RELAY
- 20:: BMS
- 30:: SWITCH
- 40:: VOLTAGE GENERATOR
- 50:: CONNECTOR

## Claims

1. An apparatus for controlling supply of power of a battery, comprising:
a relay (10) configured to supply or block the power of the battery to various loads within a vehicle; and
a voltage generator (40) configured to generate a voltage; **characterised in that** it further comprises
a switch (30) configured to be operated by the voltage generated by the voltage generator to drive the relay to allow the power of the battery to be supplied to the various loads in the vehicle,
wherein the switch (30) is configured to be inactive when the voltage is not applied,
wherein the voltage generator (40) is configured to apply the generated voltage to the switch (30) when a key inserted into a door-lock key box on the vehicle is rotated.

2. The apparatus for controlling supply of power of a battery according to claim 1, wherein the relay (10) is configured to block the power of the battery supplied to the various loads within the vehicle under a control of a battery management system (BMS) (20).

3. The apparatus for controlling supply of power of a battery according to claim 2, wherein the BMS (20) is configured to block the power of the battery supplied to the various loads within the vehicle using the relay (10) when a voltage of the battery is less than a reference voltage.

4. The apparatus for controlling supply of power of a battery according to any one of claims 1 to 3, wherein the voltage generator (40) is mounted in the door-lock key box of the vehicle.

5. The apparatus for controlling supply of power of a battery according to claim 4, wherein the door-lock key box is a driver seat door-lock key box of the vehicle.

6. The apparatus for controlling supply of power of a battery according to any one of claims 1 to 5, wherein the voltage generator (40) is a piezoelectric element.

7. The apparatus for controlling supply of power of a battery according to any one of claims 1 to 5, wherein the voltage generator (40) is a solar cell.

## Patentansprüche

1. Eine Vorrichtung zum Steuern der Leistungszufuhr einer Batterie, aufweisend:
ein Relais (10), welches dazu eingerichtet ist, die Leistung der Batterie an diverse Lasten innerhalb des Fahrzeugs zu liefern oder zu blockieren, und
einen Spannungsgenerator (40), welcher dazu eingerichtet ist,
einen Schalter (30), welcher dazu eingerichtet ist, durch die mittels des Spannungsgenerators erzeugte Spannung betätigt zu werden, so dass das Relais betrieben wird, um es der Leistung der Batterie zu erlauben, den diversen Lasten innerhalb des Fahrzeugs zugeführt zu werden,
wobei der Schalter (30) dazu eingerichtet ist, inaktiv zu sein, wenn die Spannung nicht angelegt ist,
wobei der Spannungsgenerator (40) dazu eingerichtet ist, die erzeugte Spannung an den Schalter (30) anzulegen, wenn ein in ein Türschlossschlüsselgehäuse an dem Fahrzeug eingebrachter Schlüssel gedreht wird.

2. Die Vorrichtung zum Steuern der Leistungszufuhr einer Batterie nach Anspruch 1, wobei das Relais (10) dazu eingerichtet ist, die Leistung der Batterie, welche diversen Lasten innerhalb des Fahrzeugs zugeführt wird, unter einer Steuerung eines Batteriemanagementsystems (BMS) (20) zu blockieren.

3. Die Vorrichtung zum Steuern der Leistungszufuhr einer Batterie nach Anspruch 2, wobei das BMS (20) dazu eingerichtet ist, die Leistung der Batterie, welche diversen Lasten innerhalb des Fahrzeugs zugeführt wird, unter Verwendung des Relais (10) zu blockieren, wenn eine Spannung der Batterie geringer als eine Referenzspannung ist.

4. Die Vorrichtung zum Steuern der Leistungszufuhr einer Batterie nach irgendeinem der Ansprüche 1 bis 3, wobei der Spannungsgenerator (40) in dem Türschlossschlüsselgehäuse des Fahrzeugs angebracht ist.

5. Die Vorrichtung zum Steuern der Leistungszufuhr einer Batterie nach Anspruch 4, wobei das Türschlossschlüsselgehäuse ein Fahrersitz-Türschlossschlüsselgehäuse des Fahrzeugs ist.

6. Die Vorrichtung zum Steuern der Leistungszufuhr einer Batterie nach irgendeinem der Ansprüche 1 bis 5, wobei der Spannungsgenerator (40) ein piezoelektrisches Element ist.

7. Die Vorrichtung zum Steuern der Leistungszufuhr einer Batterie nach irgendeinem der Ansprüche 1 bis 5, wobei der Spannungsgenerator (40) eine Solarzelle ist.

## Revendications

1. Appareil pour commander la fourniture d'énergie d'une batterie, comprenant :
un relais (10) configuré pour fournir ou bloquer l'énergie fournie par la batterie à diverses charges à l'intérieur d'un véhicule ; et
un générateur de tension (40) configuré pour générer une tension ;
**caractérisé en ce qu'**il comprend en outre
un commutateur (30) configuré pour être actionné par la tension générée par le générateur de tension pour entraîner le relais afin de permettre à l'énergie de la batterie d'être fournie aux diverses charges du véhicule,
dans lequel le commutateur (30) est configuré pour être inactif lorsque la tension n'est pas appliquée,
dans lequel le générateur de tension (40) est configuré pour appliquer la tension générée au commutateur (30) lorsqu'une clé insérée dans un boîtier de clé de serrure de portière sur le véhicule est tournée.

2. Appareil pour commander la fourniture d'énergie d'une batterie selon la revendication 1, dans lequel le relais (10) est configuré pour bloquer l'énergie de la batterie fournie à diverses charges à l'intérieur du véhicule sous le contrôle d'un système de gestion de batterie (BMS) (20).

3. Appareil pour commander la fourniture d'énergie d'une batterie selon la revendication 2, dans lequel le système BMS (20) est configuré pour bloquer l'énergie de la batterie fournie à diverses charges à l'intérieur du véhicule au moyen du relais (10) lorsqu'une tension de la batterie est inférieure à une tension de référence.

4. Appareil pour commander la fourniture d'énergie d'une batterie selon l'une quelconque des revendications 1 à 3, dans lequel le générateur de tension (40) est monté dans le boîtier de clé de serrure de portière du véhicule.

5. Appareil pour commander la fourniture d'énergie d'une batterie selon la revendication 4, dans lequel le boîtier de clé de serrure de portière est un boîtier de clé de serrure de portière du véhicule situé au niveau du siège conducteur.

6. Appareil pour commander la fourniture d'énergie d'une batterie selon l'une quelconque des revendications 1 à 5, dans lequel le générateur de tension (40) est un élément piézoélectrique.

7. Appareil pour commander la fourniture d'énergie d'une batterie selon l'une quelconque des revendications 1 à 5, dans lequel le générateur de tension (40) est une cellule solaire.
